Europäisches Patentamt

European Patent Office

Office européen des brevets

(19)

(11) **EP 1 340 014 B1**

(12) **FASCICULE DE BREVET EUROPEEN**

(45) Date de publication et mention
de la délivrance du brevet:
**12.05.2004   Bulletin 2004/20**

(21) Numéro de dépôt: **01997657.0**

(22) Date de dépôt: **12.11.2001**

(51) Int Cl.⁷: **F16L 11/16**, F16L 11/24

(86) Numéro de dépôt international:
**PCT/FR2001/003524**

(87) Numéro de publication internationale:
**WO 2002/042674 (30.05.2002 Gazette 2002/22)**

(54) **CONDUITE TUBULAIRE FLEXIBLE**

FLEXIBLE RÖHRENFÖRMIGE LEITUNG

FLEXIBLE TUBULAR PIPE

(84) Etats contractants désignés:
**AT BE CH CY DE DK ES FI FR GB GR IE IT LI LU
MC NL PT SE TR**

(30) Priorité: **24.11.2000  FR 0015203
25.01.2001  FR 0101010**

(43) Date de publication de la demande:
**03.09.2003   Bulletin 2003/36**

(73) Titulaires:
• **TECHNIP FRANCE
92400 Courbevoie (FR)**
• **Institut Français du Pétrole
92500 Rueil Malmaison (FR)**

(72) Inventeurs:
• **ESPINASSE, Philippe
F-76420 Bihorel (FR)**
• **JUNG, Patrice, Joel, Louis
F-76940 La Mailleraye sur Seine (FR)**
• **AVERBUCH, Daniel
F-92500 Rueil-Malmaison (FR)**
• **DUPOIRON, François
F-76360 Barentin (FR)**

(74) Mandataire: **Bertrand, Didier et al
Cabinet FEDIT-LORIOT
38, Avenue Hoche
75008 Paris (FR)**

(56) Documents cités:
**BE-A- 349 393            FR-A- 2 665 237
US-A- 6 145 546**

EP 1 340 014 B1

## Description

La présente invention concerne une conduite tubulaire flexible, utilisable de préférence en mer profonde, pour des profondeurs comprises entre 1000 et 3000 m bien qu'elle puisse également être utilisée pour des profondeurs inférieures à 1000 m. De telles conduites tubulaires flexibles sont utilisées dans des installations de production pétrolière sous-marine, pour le transport de fluides tels que des hydrocarbures.

Plusieurs types de conduites tubulaires flexibles sont actuellement utilisées et elles sont décrites dans l'API 17 J (AMERICAN PETROLEUM INSTITUTE). Dans certaines conduites flexibles, il y a une voûte de pression qui est constituée par un enroulement hélicoïdal à pas court d'un fil de forme qui peut être auto-agrafable ou agrafable à l'aide d'une agrafe. De même, les carcasses métalliques utilisées dans les conduites flexibles dites "Rough bore" sont réalisées à partir d'une bande métallique profilée à double agrafage et résistant à l'écrasement.

Dans tous les cas, on a cherché à améliorer le rapport inertie/poids des fils de forme ou feuillard agrafé utilisés pour réaliser les différentes couches métalliques des conduites flexibles.

Pour des applications en mer profonde et dans le cas des voûtes de pression, les fils de renfort doivent présenter une inertie importante pour résister à la pression externe et un poids faible pour réduire le poids total de la conduite flexible afin d'améliorer les performances des moyens de pose et permettre l'auto-supportage de la conduite flexible.

Plusieurs solutions ont été proposées.

Une première solution a consisté à utiliser un fil de forme dont la section est en I, comme cela est décrit dans FR-A-2 782 142. Un tel fil de forme présente un rapport inertie/poids acceptable mais le prix de fabrication est très élevé en raison du fait qu'il est obtenu par tréfilage ou laminage.

Une autre solution est décrite dans FR 2 654 795. La carcasse interne est réalisée à partir de bandes métalliques à double agrafage, en effectuant une déformation plastique d'un ruban métallique plat tel qu'un feuillard en acier inoxydable, pour lui conférer la forme d'une bande profilée à double agrafage, puis en effectuant un spiralage de la bande profilée, c'est-à-dire en l'enroulant hélicoïdalement à faible pas avec emboîtement des bandes métalliques profilées. Après emboîtement des deux spires consécutives, une dernière déformation plastique de la bande est effectuée pour compléter l'agrafage.

Dans le brevet FR 2 665 237, il est préconisé de réaliser une carcasse tubulaire métallique comportant au moins un caisson enroulé en hélice avec un faible pas, ladite carcasse métallique étant obtenue au moyen de deux bandes profilées complémentaires enroulées hélicoïdalement avec un faible pas. De nombreux exemples de bandes profilées sont décrits et représentés dans ce document, certains d'entre eux, comme par exemple ceux des figures 8 et 9, étant constitués par une bande en forme de S allongé et comportant un caisson à une première extrémité et un bord d'accrochage incurvé vers le haut à l'autre extrémité, le bord d'accrochage pénétrant dans une cuvette formée par le caisson et la barre transversale du S de la spire précédente. Le bord d'accrochage incurvé peut reposer sur le fond de la cuvette (figure 9) ou ne pas être en contact avec ledit fond (figure 8).

Il est à noter que toutes les sections des caissons ménagés à l'une et/ou à l'autre des extrémités de chaque bande profilée sont des sections carrées ou rectangulaires.

Bien que de telles bandes profilées à caisson aient donné satisfaction, il a été constaté certains inconvénients. Si on considère qu'un caisson est formé par des parties d'une même spire de la bande profilée et comporte une paroi supérieure, une paroi inférieure et des parois latérales et lorsqu'une force extérieure est appliquée sur l'une des parois supérieure et/ou inférieure, telle qu'une force de compression ou d'écrasement ou encore une force engendrée par le fluide sous pression, il se produit alors un flambage des parois ou faces latérales et/ou des parois supérieure ou inférieure du caisson, ce qui diminue au moins localement la résistance à l'écrasement de la carcasse interne.

Pour des forces ou des pressions dépassant une certaine valeur, il se produit un flambage des parois latérales du caisson.

Pour des forces ou des pressions plus faibles et lorsque les parois latérales ne sont pas rigoureusement perpendiculaires aux parois supérieure et inférieure du caisson, il peut se produire un écrasement dudit caisson entraînant un écartement ou un rapprochement des parois latérales (ouverture ou fermeture du caisson). Pour éviter ces phénomènes d'ouverture ou de fermeture, il a été préconisé, dans certains cas, comme par exemple dans FR 2 665 237 de souder une extrémité du caisson en un point de la bande. Mais une telle solution enchérit le coût de fabrication et elle est difficile à mettre en oeuvre.

Dans un mode de réalisation antérieur, le feuillard caisson affecte la forme d'une lunette. Ce profil est réalisé à partir d'un feuillard dont les bords libres sont soudés sur ce même profil de manière à conférer au profil une bonne stabilité pour la pose. Toutefois, l'opération de soudage est difficile à mettre en oeuvre et augmente considérablement le coût de fabrication. Du fait que les soudures sont excentrées par rapport à la fibre neutre du profil, elles sont soumises à de fortes contraintes lors du spiralage, ce qui peut entraîner une rupture locale de la soudure. Une telle rupture de la soudure peut, à son tour entraîner une diminution considérable des performances mécaniques de la voûte de pression de l'ordre de 10 à 30 %, en raison du fait que le profil n'est plus stable.

Dans un autre mode de réalisation antérieur, le profil lunette est similaire mais réalisé à partir de deux tubes, de section carrée, lesdits tubes étant reliés par un feuillard qui est soudé sur ces tubes. Les opérations de soudage renchérissent également et de manière considérable le coût de fabrication.

De plus, ces diverses formes du profil ne permettent pas de limiter le fluage d'une gaine d'étanchéiré adjacente, ce qu'on cherche à éviter dans la mesure du possible dans le cas de la voûte de pression principalement. Il faut également noter qu'aucune indication n'est donnée quant au rapport largeur/épaisseur du feuillard alors que cela est devenu important pour assurer la stabilité du profil lors de la pose, afin d'éviter l'effet de flambage.

En effet, si le profil a une largeur trop importante par rapport à son épaisseur, les parois latérales du caisson flamberont lors du spiralage ou enroulement à pas court.

Dans la demande de brevet 0005175 du 21 avril 2000, les profils qui sont décrits donnent de bons résultats mais présentent parfois des inconvénients notamment en raison de la forte dissymétrie du profil, cette dissymétrie constituant un obstacle lors du spiralage qui est, de ce fait, difficile à réaliser. De plus, le rapport inertie/pas est diminué par la présence du bord libre qui apporte peu d'inertie.

La présente invention a pour but de proposer un profil qui permet de simplifier les opérations de spiralage tout en ayant un rapport inertie/pas important, proche de celui obtenu avec des fils de forme traditionnels de hauteur équivalente, et un rapport inertie/poids important, nécessaire pour les grandes profondeurs notamment.

La présente invention a pour objet une conduite tubulaire flexible, du type comprenant au moins un profilé métallique spiralé en hélice autour d'un axe longitudinal (A-A) de ladite conduite flexible, et elle est caractérisée en ce que le profilé est constitué par une bande métallique dont chaque spire comprend deux caissons distincts qui sont obtenus par pliage de ladite bande de façon que les bords libres du feuillard sont rabattus entre les deux caissons et en contact avec une portion de bande ménagée sur un renflement réalisé entre les deux caissons, ladite portion de contact étant située sensiblement sur la fibre neutre dudit profilé, et en ce que chaque caisson présente une forme trapézoïdale.

Un avantage de la présente invention réside dans le fait qu'on utilise un feuillard métallique qui est peu coûteux et qui se prête bien au pliage pour former des caissons séparés et réaliser ainsi un profilé qui présente une inertie importante tout en maintenant un rapport inertie/poids élevé lorsque le profilé est utilisé pour réaliser notamment une voûte de pression pour les applications grande profondeur. Le pliage avec des bords libres de la bande en contact avec une portion de bande située sensiblement dans la fibre neutre du profilé augmente considérablement la stabilité du profilé et facilite le spiralage du profilé.

D'autres avantages et caractéristiques apparaîtront plus clairement à la lecture de la description de plusieurs modes de réalisation de l'invention ainsi que des dessins annexés sur lesquels :

la figure 1 est une vue en coupe d'une partie du profilé selon l'invention et agrafé par le haut.
La figure 2 est une vue en coupe d'une partie du profilé selon l'invention et agrafé parle haut et le bas.
La figure 3 est une vue en coupe d'une partie du profilé selon un autre mode de réalisation.

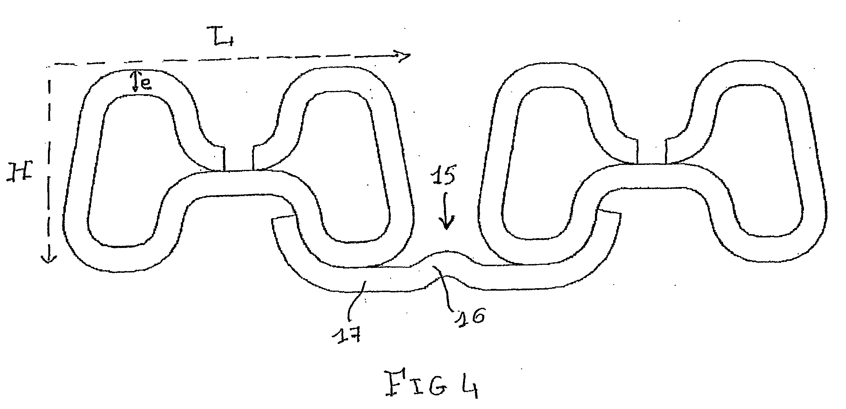

La figure 4 est une vue en coupe du profilé agrafé avec une agrafe améliorée.

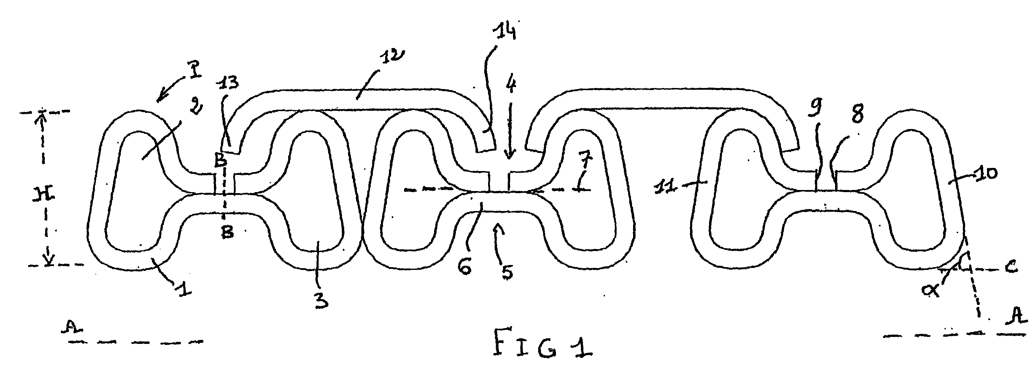

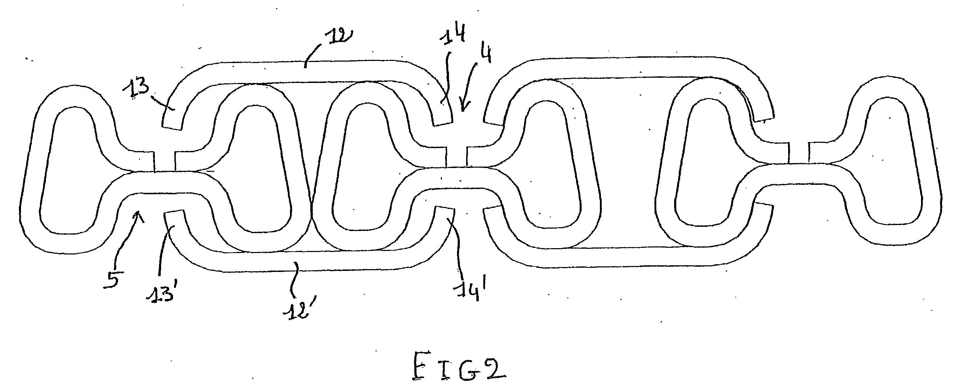

Le profilé P selon l'invention et représenté sur les figures 1 et 2 est constitué par une bande en feuillard métallique 1 qui est pliée de manière à former deux caissons trapézoïdaux distincts 2, 3 qui sont symétriques par rapport à un axe de symétrie vertical B-B. Les caissons 2, 3 sont séparés par un renflement supérieur 4 et un renflement inférieur 5. La portion de bande 6 qui constitue le fond du renflement inférieur 5 est située sensiblement dans le plan de la fibre neutre 7 et elle sert d'appui aux bords libres 8, 9 de la bande qui ont été rabattus vers l'intérieur lors du pliage, les bords libres 8, 9 étant alignés et disposés en regard l'un de l'autre, ainsi que cela est représenté sur les figures.

Chaque caisson trapézoïdal 2, 3 comprend des parois latérales 10, 11 qui sont inclinées et qui font avec l'horizontale C un angle $\alpha$ supérieur à 60° et inférieur à 90°, de sorte que sous l'effet des pressions de contact auxquelles est soumis le profilé, les bords libres 8, 9 auront tendance à se rapprocher l'un de l'autre, en glissant sur la portion de bande de contact 6, sans possibilité de se chevaucher l'un sur l'autre, ce qui pourrait conduire à une déformation du profilé et donc à une déstabilisation. En effet, sous l'effet des pressions de contact développées dans la conduite flexible et transmise au profilé, les bords libres 8, 9 peuvent venir en butée l'un contre l'autre ce qui les empêche de se chevaucher et de stabiliser davantage le profilé. Comme les bords libres 8, 9 sont sur la portion de contact 6 qui est sensiblement dans le plan de la fibre neutre 7 et donc dans une zone sensiblement centrale du profilé, ladite zone sera donc soumise à peu de contraintes lors du spiralage et travaillera peu, ce qui améliore grandement la stabilité et les performances du profilé.

Pour un angle $\alpha$ proche de 90°, le profilé est plus résistant et pour un angle $\alpha$ proche de 60°, le profilé est plus stable. En conséquence, l'angle $\alpha$ optimal sera un compromis entre la résistance et la stabilité.

Le profilé décrit ci-dessus peut être utilisé pour la réalisation d'une voûte de pression ou de la carcasse métallique lorsque la conduite flexible en comporte une, par enroulement en hélice, avec un pas court, autour de l'axe horizontal A-A de la conduite flexible, chaque spire de l'enroulement étant constituée par un couple de caissons 2, 3. Comme le profilé n'est pas auto-agrafable, il est possible d'agrafer les spires de plusieurs manières.

La première manière d'agrafage est représentée sur la figure 1. Dans ce mode de réalisation, les spires de l'enroulement du profilé sont agrafées par le haut, c'est-à-dire que les agrafes 12, par exemple en U inversé, ont leurs branche 13 et 14 disposées dans les renflements supérieurs 4 consécutifs. Un autre agrafage, non représenté, consiste à utiliser les mêmes agrafes mais référencées 12' ont leurs branches 13' et 14' disposées dans les renflements inférieurs 5 consécutifs. Dans ce dernier cas, on obtient un agrafage par le bas par opposition au précédent qui est appelé agrafage par le haut.

Un autre mode d'agrafage représenté sur la figure 2 consiste à agrafer les spires par le haut et par le bas, avec des agrafes supérieures 12 dont les branches 13 et 14 sont disposées dans les renflements supérieurs 4, et des agrafes inférieures 12' dont les branches 13' et 14' sont disposées dans les renflements inférieurs 5.

L'agrafage par le bas présente l'avantage de ne pas induire des efforts éventuels sur les bords libres 8 et 9.

Les agrafes supérieures et/ou inférieures peuvent avantageusement présenter, au niveau du déjoint 15 entre deux spires consécutives, un renflement ou bossage 16, ce qui permet d'augmenter localement l'inertie de l'agrafe 17. L'agrafe rigidifiée au niveau du bossage 16, est plus résistante à la pression interne du fluide circulant dans la conduite flexible. Le fluage de la gaine d'étanchéité interne, sous l'effet de la pression interne, applique une pression de contact importante sur l'agrafe. Par ailleurs, pour améliorer les caractéristiques techniques de l'agrafe 17, les rayons de courbure du bossage 16 correspondent à ceux du profilé de manière à permettre la conservation des jeux fonctionnels de la voûte. Pour augmenter la résistance à l'éclatement de la voûte de pression sous l'effet de la pression interne circulant dans la conduite flexible, on peut utiliser les propriétés de l'agrafe 17. La résistance à la pression interne dépendant en partie de la section et des caractéristiques mécaniques du matériau utilisé, il suffit d'augmenter l'épaisseur de l'agrafe ou de choisir un matériau à hautes caractéristiques mécaniques et, de préférence, supérieures à celle du profilé ; le couple voûte-agrafe aura une résistance à l'éclatement plus importante.

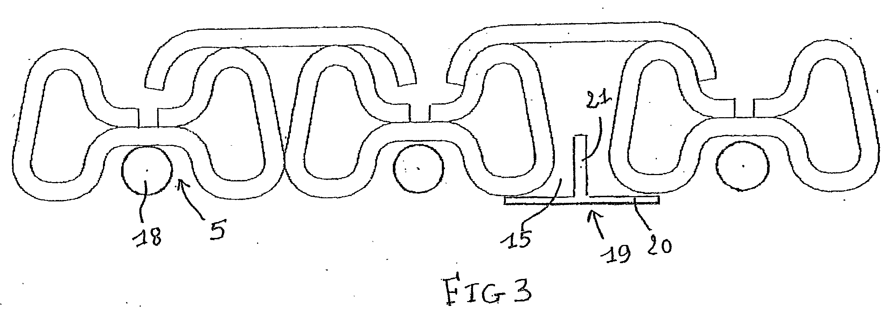

Il est également possible d'utiliser des moyens pour réduire le fluage d'une gaine polymérique interne étanche qui serait en appui sur le profilé. Ces moyens peuvent comprendre seuls ou en combinaison, un jonc 18 qui est de préférence disposé dans les renflements inférieurs 5 et/ou un fil de forme 19 qui recouvre le déjoint 15 entre deux spires consécutives. Le fil de forme peut être plat ou présenter la forme d'un T inversé 20 , ainsi que cela est représenté sur la figure 3, la branche verticale 21 du T 20 se logeant dans le déjoint 15. Le fil de forme 19 peut être également une bande tissée antifluage telle que décrite dans FR 2 744 511. Ces moyens pour réduire le fluage d'une gaine peuvent être prévus au-dessus du profilé lorsqu'il est agrafé par le bas et lorsque la gaine polymérique est disposée au-dessus du profilé.

Un autre avantage réside dans le fait que l'agrafage s'effectuant dans le caisson, on optimise ainsi le rapport inertie/pas du profilé tout en éliminant les zones à faible inertie.

L'annulaire d'une conduite flexible est délimité par la gaine d'étanchéité externe et la gaine d'étanchéité interne. Cet annulaire est généralement à la pression atmosphérique. Lorsque cet annulaire est envahi par l'eau de mer, par suite d'une déchirure ou un perçage de la gaine d'étanchéité externe ou lorsque cette dernière n'existe pas, la pression hydrostatique s'applique directement sur la gaine d'étanchéité interne. Il en résulte que les pressions de contact auxquelles sont soumises toutes les couches d'armage situées au-dessus de la gaine d'étanchéité interne sont réduites et dans ce cas, elles ne devront plus résister à un différentiel de pression important et ne reprennent plus en conséquence cet effort qui est transféré sur la carcasse interne. Les couches d'armage n'auront plus qu'à reprendre la pression interne du fluide circulant dans la conduite flexible, diminuée de la pression hydrostatique, ainsi que les efforts axiaux et la compression due à la traction.

Les bords libres 8, 9 sont légèrement éloignés l'un de l'autre ou en contact, de manière à limiter la déformation du profilé lorsqu'il est soumis à des efforts de contact, ou peuvent être reliés entre eux par une soudure longitudinale, soudure par point, boutonnage, ou encore par sertissage avec une agrafe en T.

Lorsque l'annulaire est envahi par de l'eau de mer, si le profilé est étanche (soudure longitudinale continue), la pression hydrostatique s'applique sur la surface extérieure du profilé et oblige à calculer ce dernier pour qu'il résiste à un différentiel de pression. Comme les deux caissons du profilé présentent chacun un faible volume, la résistance à l'écrasement est augmentée par rapport à un seul caisson qui aurait un volume plus grand. Lorsque le profilé n'est pas étanche, en cas d'annulaire immergé, l'eau envahit également l'intérieur du profilé et les caissons du profilé ne sont donc plus soumis à la pression hydrostatique.

De plus, les renflements supérieur et inférieur diminuent les risques de flexion des parois supérieures et inférieures du caisson du profilé.

Les profilés représentés sur les figures ne doivent pas dépasser une certaine largeur L pour que le profilé creux puisse être enroulé hélicoïdalement. En effet, lors de l'enroulement, si le profilé est trop large, les efforts seront trop importants et risqueraient de faire flamber les parois latérales du profil. Ce dernier doit donc avoir une largeur L maximum en fonction de l'épaisseur $e$ de la bande feuillard, d'une part, et en fonction de la hauteur H du profil, d'autre part. Les essais effectués ont montré que les résultats sont satisfaisants lorsque :

$$0,5 < \frac{L}{H} < 4$$

$$L/e < 20$$

En réalisant un fil de renfort à partir d'un feuillard selon l'invention, on obtient un couple profilé-agrafe qui est plus compact, ce qui optimise le rapport inertie/pas d'enroulement. En conséquence, les performances de la voûte de pression réalisée avec un des modes de réalisation décrits ci-dessus sont augmentées. Les mesures effectuées montrent que pour un profilé de 20 mm de hauteur et 3 mm d'épaisseur, le rapport inertie/pas efficace est de 260 mm$^3$ alors que le même rapport pour un profilé caisson de l'art antérieur, de 20 mm de hauteur et de 3 mm d'épaisseur, est de 210 mm$^3$.

On part d'un feuillard de 2,5 mm d'épaisseur et de 120 mm de largeur. Le feuillard est plié de manière à obtenir un profilé de 20,4 mm de hauteur et de 38 mm de largeur. Les pentes des faces latérales du profilé sont de 80° par rapport à l'horizontal. On obtient avec de telles dimensions un rapport inertie/pas de 250 mm$^3$.

Quant au rapport inertie/poids du profilé selon l'invention, on a déterminé qu'il était en augmentation de 20 % par rapport aux profilés allégés connus et de 60 % par rapport aux fils de forme (zêta, têta). La présente invention atteint ainsi un double objectif, celui du coût réduit de fabrication et celui d'une augmentation du rapport inertie/poids pour une utilisation en mer profonde où il est nécessaire de résister à de fortes pressions externes.

Il est à noter que le jonc 18 décrit précédemment peut être constitué par un jonc plastique ou un tube transportant un fluide caloporteur pour du chauffage actif par exemple ou renfermant un câble électrique pour du chauffage actif. Le jonc ou tube disposé dans les renflements peut également renfermer une fibre optique.

Les fonctions du transport rappelées ci-dessus et concernant notamment le chauffage actif, la fibre optique etc..., peuvent être intégrées directement à l'intérieur d'au moins un des caissons du profilé.

**Revendications**

1. Conduite tubulaire flexible, du type comprenant au moins un profilé (P) métallique spiralé en hélice autour d'un axe longitudinal (A-A) de ladite conduite flexible, **caractérisée en ce que** le profilé (P) est constitué par une bande métallique feuillard (1) dont chaque spire comprend deux caissons distincts (2, 3) qui sont obtenus par pliage de ladite bande feuillard de façon que les bords libres (8, 9) du feuillard sont rabattus entre les deux caissons (2, 3) et en contact avec une portion de bande (6) ménagée sur un renflement (5) réalisé entre les deux caissons, ladite portion de contact (6) étant située sensiblement sur la fibre neutre (7) dudit profilé, et **en ce que** chaque caisson (2, 3) présente une forme trapézoïdale.

2. Conduite flexible selon la revendication 1, **caractérisée en ce que** les caissons (2, 3) sont symétriques par rapport à un axe médian (B-B) passant entre les bords libres en regard (8, 9).

3. Conduite flexible selon les revendications 1 ou 2, **caractérisée en ce que** les parois latérales (10, 11) de chaque caisson font avec l'horizontale (6) un angle ($\alpha$) supérieur à 60° et inférieur à 90°.

4. Conduite flexible selon la revendication 1, **caractérisée en ce que** les bords libres (8, 9) sont en contact l'un avec l'autre.

5. Conduite flexible selon la revendication 1, **caractérisée en ce que** deux spires consécutives du profilé enroulé en hélice sont agrafées par une agrafe (12, 12', 17) dont les extrémités (13, 14, 13', 14') sont logées dans le renflement (4) situé au-dessus des bords libres (8, 9).

6. Conduite flexible selon la revendication 1, **caractérisée en ce que** deux spires consécutives du profilé enroulé en hélice sont agrafées par une agrafe (12') dont les extrémités sont logées dans le renflement (5).

7. Conduite flexible selon la revendication 1, **caractérisée en ce que** deux spires consécutives du profilé enroulé en hélice sont agrafées par une première agrafe (12) dont les extrémités (13, 14) sont logées dans le renflement (4) situé au-dessus des bords libres (8, 9) et par une deuxième agrafe (12') dont les extrémités (13', 14') sont logées dans le renflement (5).

8. Conduite flexible selon l'une quelconque des revendications 1 à 7, **caractérisée en ce que** les bords libres (8, 9) sont reliés entre eux.

9. Conduite flexible selon l'une des revendications précédentes, **caractérisée en ce qu'**un jonc (18) est disposé dans les renflements (5).

10. Conduite flexible selon l'une quelconque des revendications 1 à 8, **caractérisé en ce qu'**un moyen antifluage (19) est disposé dans un déjoint (15) ménagé entre deux spires consécutives du profilé.

11. Conduite flexible selon l'une des revendications 5, 7 ou 10, **caractérisée en ce que** l'agrafe inférieure (12', 17) présente un bossage (16) qui est disposé dans le déjoint (15) entre deux spires consécutives du profilé.

## Claims

1. Flexible tubular pipe, of the type comprising at least one metal profile (P) spiralled in a helix about a longitudinal axis (A-A) of the said flexible pipe, **characterized in that** the profile (P) consists of a metal strip (1), each turn of which comprises two separate box sections (2, 3) which are obtained by bending the said strip so that the free edges (8, 9) of the strip are turned down between the two box sections (2, 3) and are in contact with a strip portion (6) provided on a bulge (5) formed between the two box sections, the said contact portion (6) lying approximately along the neutral fibre (7) of the said profile, and **in that** each box section (2, 3) has a trapezoidal shape.

2. Flexible pipe according to Claim 1, **characterized in that** the box sections (2, 3) are symmetrical with respect to a mid-axis (B-B) passing between the opposed free edges (8, 9).

3. Flexible pipe according to either of Claims 1 and 2, **characterized in that** the side walls (10, 11) of each box section make an angle ($\alpha$) greater than 60° and less than 90° with the horizontal (6).

4. Flexible pipe according to Claim 1, **characterized in that** the free edges (8, 9) are in contact with each other.

5. Flexible pipe according to Claim 1, **characterized in that** two consecutive turns of the profile wound in a helix are interlocked by a fastener (12, 12', 17), the ends (13, 14, 13', 14') of which fit into the bulge (4) located above the free edges (8, 9).

6. Flexible pipe according to Claim 1, **characterized in that** two consecutive turns of the profile wound in a helix are interlocked by a fastener (12'), the ends of which fit into the bulge (5).

7. Flexible pipe according to Claim 1, **characterized in that** two consecutive turns of the profile wound in a helix are interlocked by a first fastener (12), the ends (13, 14) of which fit into the bulge (4) located above the free edges (8, 9), and by a second fastener (12'), the ends (13', 14') of which fit into the bulge (5).

8. Flexible pipe according to any one of Claims 1 to 7, **characterized in that** the free edges (8, 9) are joined together.

9. Flexible pipe according to one of the preceding claims, **characterized in that** a rod (18) is placed in the bulges (5).

10. Flexible pipe according to any one of Claims 1 to 8, **characterized in that** an anti-creep means (19) is placed in an interjoint space (15) provided between two consecutive turns of the profile.

11. Flexible pipe according to one of Claims 5, 7 or 10, **characterized in that** the lower fastener (12', 17) has a hump (16) which is placed in the interjoint space (15) between two consecutive turns of the profile.

## Patentansprüche

1. Flexible röhrenförmige Leitung des Typs, der mindestens ein um eine Längsachse (A-A) der flexiblen Leitung spiralförmig gewickeltes metallisches Profil (P) aufweist, **dadurch gekennzeichnet, daß** das Profil (P) aus einem Metallbandstreifen (1) besteht, dessen Windungen jeweils zwei getrennte Kammern (2,3) aufweisen, die dadurch entstehen, daß der Bandstreifen so gebogen wird, daß die freien Kanten (8,9) des Bands zwischen den zwei Kammern (2,3) zurückgeschlagen und mit einem Streifenabschnitt (6) in Kontakt sind, der an einer Ausbauchung vorgesehen ist, die zwischen den zwei Kammern geformt ist, wobei der Kontaktabschnitt (6) im wesentlichen an der neutralen Faser (7) des Profils angeordnet ist, und dadurch, daß jede Kammer (2,3) trapezförmig ist.

2. Flexible Leitung nach Anspruch 1, **dadurch gekennzeichnet, daß** die Kammern (2,3) bezüglich einer Mittelachse (B-B), die zwischen den zwei sich gegenüberliegenden freien Kanten (8,9) hindurchgeht, symmetrisch sind.

3. Flexible Leitung nach Anspruch 1 oder 2, **dadurch gekennzeichnet, daß** die Seitenwände (10,11) jeder Kammer mit der Horizontalen (6) einen Winkel ($\alpha$) bilden, der größer als 60° und kleiner als 90° ist.

4. Flexible Leitung nach Anspruch 1, **dadurch gekennzeichnet, daß** die freien Kanten (8,9) miteinander in Kontakt sind.

5. Flexible Leitung nach Anspruch 1, **dadurch gekennzeichnet, daß** zwei aufeinanderfolgende Windungen des spiralförmig gewickelten Profils mit einer Klammer (12,12',17) verbunden sind, deren Enden (13,14,13',14') in einer Ausbauchung (4) untergebracht sind, die oberhalb der freien Kanten (8,9) angeordnet ist.

6. Flexible Leitung nach Anspruch 1, **dadurch gekennzeichnet, daß** zwei aufeinanderfolgende Windungen des spiralförmig gewickelten Profils mit einer Klammer (12') verbunden sind, deren Enden in der Ausbauchung (5) untergebracht sind.

7. Flexible Leitung nach Anspruch 1, **dadurch gekennzeichnet, daß** zwei aufeinanderfolgende Windungen des spiralförmig gewickelten Profils mit einer ersten Klammer (12) verbunden sind, deren Enden (13,14) in einer Ausbauchung (4) untergebracht sind, die oberhalb der freien Kanten (8,9) angeordnet ist, und mit einer zweiten Klammer (12') verbunden sind, deren Enden (13',14') in der Ausbauchung (5) untergebracht sind.

8. Flexible Leitung nach einem der Ansprüche 1 bis 7, **dadurch gekennzeichnet, daß** die freien Kanten (8,9) untereinander verbunden sind.

9. Flexible Leitung nach einem der vorstehenden Ansprüche, **dadurch gekennzeichnet, daß** ein Ring (18) in den Ausbauchungen (5) angeordnet ist.

10. Flexible Leitung nach einem der Ansprüche 1 bis 8, **dadurch gekennzeichnet, daß** ein Antikriech-Mittel (19) in einer Trennfuge (15) angeordnet ist, die zwischen zwei aufeinanderfolgenden Windungen des Profils vorgesehen ist.

11. Flexible Leitung nach einem der Ansprüche 5, 7 oder 10, **dadurch gekennzeichnet, daß** die untere Klammer (12',17) einen Höcker (16) aufweist, der in der Trennfuge (15) zwischen zwei aufeinanderfolgenden Windungen des Profils angeordnet ist.

FIG 1

FIG2

FIG-3

FIG 4